Europäisches Patentamt

European Patent Office

Office européen des brevets

(19)

(11) Publication number: **0 272 119 B1**

(12) **EUROPEAN PATENT SPECIFICATION**

(45) Date of publication of patent specification: **17.03.93**  (51) Int. Cl.5: **A23K 1/17, A23K 1/00**

(21) Application number: **87311124.9**

(22) Date of filing: **17.12.87**

(54) **Stable antibiotic ester feed compositions.**

(30) Priority: **18.12.86 US 944703**
**03.11.87 US 116421**

(43) Date of publication of application:
**22.06.88 Bulletin 88/25**

(45) Publication of the grant of the patent:
**17.03.93 Bulletin 93/11**

(84) Designated Contracting States:
**AT BE CH DE ES FR GB GR IT LI LU NL SE**

(56) References cited:
EP-A- 0 091 767    EP-A- 0 183 424
AU-A- 544 835    US-A- 3 809 751
US-A- 4 394 377    US-A- 4 431 665
US-A- 4 582 822

(73) Proprietor: **SYNTEX (U.S.A.) INC.**
**3401 Hillview Avenue**
**Palo Alto California 94303(US)**

(72) Inventor: **Runkel, Richard A.**
**741 Garland Drive**
**Palo Alto California 94303(US)**
Inventor: **Berry, Stephen A.**
**13361 Argonne Drive**
**Saratoga California 95070(US)**

(74) Representative: **Armitage, Ian Michael et al**
**MEWBURN ELLIS & CO. 2/3 Cursitor Street**
**London EC4A 1BO (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.5x/3.0.1)

## Description

This invention relates to a stable livestock feed premix composition containing antibiotic esters sensitive to acid in solid formulations.

This invention also relates to a method for stabilizing an acid-sensitive antibiotic ester by incorporating said ester into a feed premix composition of the invention.

Certain antibiotic esters are capable of increasing the feed efficiency of livestock, particularly ruminants. For example, laidlomycin propionate and its salts (described in U.S. Pat. No. 4,431,665, is known to increase the feed efficiency of livestock, e.g. , swine, poultry, and ruminants, and also to control coccidial infections in livestock, including horses, cattle, poultry, swine, goats and sheep. Such antibiotic esters are preferably administered orally, in either the subject animal's feed or drinking water. When medicaments are to be administered to livestock orally, they are usually first formulated in a "premix", which is then mixed into the livestock's regular feed mixture.

US 4 394 377 discloses compositions which include choline and a propionate enhancing antibiotic compound for use in enhancing the feed performance of ruminant animals.

EP 0 091 767 discloses the stabilization of antibiotics which are unstable to heat or moisture by the inclusion of a polysaccharide gelling agent and a metal salt in formulations including the antibiotics.

However, certain antibiotic esters are unstable to the acidic conditions usually present in animal feed and premixes. It has now been discovered that, for example, laidlomycin propionate and its salts are most stable in slightly acidic solutions (pH 4-6), but is most stable in solid formulations under basic conditions (pH about 11). We have now discovered that the compositions of the invention economically and effectively stablize and protect such acid-sensitive antibiotic esters, allowing the incorporation of antibiotics such as laidlomycin esters in livestock feed without the loss of activity.

One aspect of the invention is a stable livestock feed premix which comprises an acid-sensitive antibiotic ester, a base, a protective coating, and optionally a suitable premix carrier and a sealant film.

Another aspect of the invention is a method for stabilizing acid-sensitive antibiotic esters, by granulating said esters with a base and a suitable premix carrier to form a first granulate, and coating said first granulate with a protective coating.

One aspect of the invention is a stable livestock feed premix composition which comprises an acid-sensitive antibiotic ester, a base, a protective coating, optionally a suitable premix carrier, and optionally a sealant film. A preferred subgenus of the invention is the composition wherein said formulation comprises between 0.001% to 25% antibiotic ester, 10% to 40% base, 10% to 50% protective coating, 0% to 50% carrier, and 0% to 8% sealant film, especially where said acid-sensitive antibiotic ester is a laidlomycin acylate, particularly laidlomycin propionate, or its veterinarily acceptable salts. A preferred class of the invention is the composition wherein said formulation comprises between 5 to 20% antibiotic ester, 25% to 40% base, 30% to 40% protective coating, 0% to 50% carrier, and 4% to 8% sealant film, particularly where said base is calcium hydroxide, sodium hydroxide, or potassium hydroxide. A preferred subclass of the invention is the composition wherein said protective coating is a mixture of hemicelluloses, lignins, lignosulfonates, starch or sucrose, especially a hemicellulose mixture such as Masonex®. A presently preferred embodiment of the invention is the composition which comprises 5-20% laidlomycin propionate potassium salt, 30-40% dry Masonex®, 0-8% petrolatum, mineral oil, or stearyl alcohol, 30-40% $Ca(OH)_2$, and the remainder soybean mill run.

Another aspect of the invention is a method of enhancing feed efficiency or treating coccidial infection in livestock, which method comprises: orally administering a medicated feed containing a feed premix comprising an effective amount of an acid-sensitive antibiotic ester; a suitable premix carrier; an amount of veterinarily acceptable base sufficient to raise the premix pH to an antibiotic ester-stabilizing pH; and an amount of suitable protective coating material sufficient to coat said antibiotic ester, premix carrier, and base. A preferred class of the invention is the method wherein said antibiotic ester is an acylate of laidlomycin, or a veterinarily acceptable salt thereof, especially where said premix carrier is soy bean mill run or calcium carbonate, particularly where said base is calcium hydroxide, sodium hydroxide, or potassium hydroxide. A preferred subclass is the method wherein said protective coating is lignosulfonate, hemicellulose, starch or sucrose, particularly where said protective coating is hemicellulose. A presently preferred embodiment is the method in which the premix further comprises an amount of veterinarily acceptable sealant material sufficient to coat said antibiotic ester, premix carrier, base, and protective coating material, particularly where said sealant film is stearyl alcohol or glyceryl monostearate.

Premixes of the invention may also include optional ingredients such as tackifiers, antioxidants, vitamins, anthelmintics, preservatives, colorings, flavorings, minerals, other dietary supplements, and the like.

The term "acid-sensitive antibiotic ester" refers to antibiotic esters and their veterinarily acceptable salts which are acid-labile in animal feed and are suitable for administration to livestock. Acid-sensitive antibiotic esters are antibiotic esters suitable for administration to livestock which are hydrolyzed under the acid conditions normally present in animal feed. Acid-sensitive antibiotic esters are generally most stable in solution at pHs of about 4 to about 10, but are more rapidly degraded at lower or higher pH. Such antibiotic esters are generally administered to ruminant livestock to increase feed efficiency, and may be administered to poultry to treat coccidiosis. Preferred antibiotic esters are laidlomycin acylates, particularly the acetate, propionate, butyrate, and phenylcarbamate. Laidlomycin acylates and their preparation and administration are described in U.S. Pat. No. 4,431,665 and U.S. Pat. No. 4,542,027,. Other antibiotic esters include the esters of monensin, lasalocid, salinomycin, narasin, lysocellin, lonomycin, ionomycin, grisorixin, nigericin, mutalomycin, noboritomycin, alborixin, lenoremycin, dianemycin, carriomycin, septamycin, etheromycin.

The term "veterinarily acceptable salts" refers to non-toxic salts of an antibiotic ester with an appropriate cation suitable for oral administration to livestock, for example an alkali or alkaline earth cation. Presently preferred salts are laidlomycin propionate potassium salt, laidlomycin propionate sodium salt, laidlomycin propionate calcium salt, laidlomycin propionate cholate salt, and the like, particularly laidlomycin propionate potassium salt.

The term "veterinarily acceptable" as applied to components of the premix of the invention means that the components specified is acceptable for administration to livestock, particularly oral administration. "Veterinarily acceptable" encompasses compounds which may be employed in animals, even if not acceptable for use in humans. For example, calcium hydroxide would not be considered an acceptable carrier for pharmaceutical use, but is perfectly acceptable for use in veterinary applications.

The term "antibiotic ester-stabilizing pH" refers to a pH sufficiently high to stabilize an acid-sensitive antibiotic ester in the solid phase.

The term "effective amount" refers to the amount of antibiotic ester needed to effect the result desired. For example, the effective dosage of laidlomycin esters for increasing the feed efficiency of ruminants is generally between about 0.1 and 1.0 mg/Kg/day body weight, preferably from about 0.3 to about 0.8 mg/Kg/day. An effective dose for increasing the feed efficiency of swine is generally between about 0.1 and 10 mg/Kg/day body weight, preferably from about 1.0 to about 5.0 mg/Kg/day. (Feed premixes for swine are preferably formulated at a laidlomycin ester concentration of about 10 to 100 mg/Kg of feed.) The effective dosage of laidlomycin esters for treating coccidial infections in livestock is generally between about 0.1 and 3.0 mg/Kg/day.

The term "base" as used herein refers to veterinarily acceptable bases which are capable of raising the pH of the premix formulation to an alkalinity at which the acid-labile antibiotic ester is stable, such as calcium hydroxide, sodium hydroxide, potassium hydroxide, sodium acetate, calcium carbonate, trisodium phosphate, triethanolamine, magnesium hydroxide, magnesium carbonate, sodium carbonate, and the like. The preferred pH of the final premix formulation is between about 8 and about 12, preferably about 9-12, most preferably about 11.

The term "livestock" as used herein refers to cattle, horses, poultry, swine, goats, sheep and the like. It is to be appreciated that the premix of the invention is also suitable for administration to all domestic or wild animals.

The term "premix carrier" refers to edible, non-toxic compositions suitable for incorporation in livestock feed, such as calcium carbonate, soybean mill run, rice mill hulls, wheat middlings, wheat bran, corn gluten, corn gluten meal, and other mill rub byproducts. Note that some suitable premix carriers may also serve as "bases" within the practice of the invention. For example, one can formulate a composition of the invention using calcium carbonate as both the premix carrier and the base.

The term "protective coating" refers to a material which, when granulated with an acid-sensitive antibiotic ester and a suitable premix carrier, is capable of protecting said acid-sensitive antibiotic ester from the acidic conditions normally present in livestock feed. Exemplary protective coatings are hemicellulose mixtures (e.g., Masonex®), reed lignin derivatives (e.g., Glutrin®, Norilig®, and Ameribond®, available from Reed Lignin, Inc., Rothschild, Wisconsin), corn syrup solids, dextrose, starch, hydroxypropylmethylcellulose, methylcellulose, stearic acid, dextrans, cyclodextrans, or sucrose, particularly Masonex® or reed lignin. The protective coating material is generally applied to a granulate comprising the premix carrier, antibiotic ester, and base. This may be accomplished by adding a slurry of protective coating material to the first granulate, or by mixing the first granulate with the protective coating material as a dry powder.

The term "sealant film" refers to an optional coating which may be applied to the granulated antibiotic ester-protective coating composition to provide further protection against acidic conditions. Exemplary sealant film materials are stearyl alcohol, glyceryl monostearate, sodium oleate, stearic acid, glyceryl monostearate, sodium caseinate, sorbitol, paraffin wax, petrolatum, mineral oil, gelatin, and the like. Sealant films are applied to the composition after the protective coating has been applied (e.g., the second granulate). The sealant film may be applied by dissolving the sealant film material in a volatile solvent (e.g., methanol), spraying the resulting solution over the second granulate, and drying the resulting composition to remove the volatile solvent. Alternatively, one can add the sealant film material to the second granulate as a solid, and gently heat the mixture to melt the sealant film material. The latter method is suitable for use with low-melting materials, e.g., materials which melt at temperatures of 60°C or less, in order to avoid degrading the antibiotic ester.

The term "Masonex®" refers to a hemicellulose extract by-product of Masonite board process. Masonex® is a viscous, dark-colored syrup which is commonly about 50% mixed hemicelluloses and 50% water. Masonex® is commercially available from Masonite Corporation.

PREPARATION

Compositions of the invention are prepared by the following procedures:

The antibiotic ester is first dispersed in an aqueous slurry of base. The resulting dispersion is then used to granulate the premix carrier. The resulting moist granulate is then air dried, followed by further granulation with a slurry of protective coating material. This second granulate is also dried, e.g., using warm air. If desired, one may apply a sealant film to this dried second granulate either by adding a methanol solution of the sealant while stirring the dried second granulate, or by simply mixing in solid sealant and applying enough heat to melt the sealant. The resulting sealed or unsealed second granulate can be mixed with animal feed at the appropriate concentration to produce an animal feed premix formulation suitable for administration to livestock.

Alternatively, one may granulate the premix carrier with a slurry of aqueous base. The resulting moist granulate is then air dried, followed by further granulation with a slurry of antibiotic ester mixed with the protective coating material. This second granulate is also dried, e.g., using warm air. If desired, one may apply a sealant film to this dried second granulate either by adding a methanol solution of the sealant while stirring the dried second granulate, or by simply mixing in solid sealant and applying enough heat to melt the sealant. The resulting sealed or unsealed second granulate can be mixed with animal feed at the appropriate concentration to produce an animal feed premix formulation suitable for administration to livestock.

One may also prepare the premix of the invention by fluid bed granulation. This is presently the preferred method of manufacture. For example, the antibiotic ester, carrier and base are mixed together and spread in a fluid bed reactor. The powder mixture is fluidized with air at about 80°C, and granulated with Masonex® (the Masonex® is diluted with water until an appropriate viscosity is obtained.) The mixture is granulated and dried in the fluid bed reactor for a total time of about 1-3 hours, at a bed temperature of about 20-40°C.

The finished formulation should contain between about 0.001% and 25% antibiotic ester, 10% to about 40% base, about 10% to about 50% protective coating, about 0% to about 50% carrier, and 0% to about 8% sealant film. In formulations containing little or no carrier, the base is used in a granulated form and also plays the role of carrier.

Compositions of the invention may be prepared by other methods as well. A suitable method will produce a particulate premix composition wherein a suitable premix carrier mixed with an acid-sensitive antibiotic ester and a suitable base form the cores of the premix particles. These cores are coated in a layer of protective coating material, and optionally coated with an additional sealant film.

The following examples are presented for the purposes of illustration.

EXAMPLE 1

(Formulations)

The following are exemplary formulations of the invention:

(A)    Premix 1:

| Ingredient | Amount | |
|---|---|---|
| Laidlomycin propionate, K+ | 10.0 Kg | |
| $Ca(OH)_2$ | 20.0 Kg | |
| Masonex• (pH adjusted to 12) | 30.0 Kg | (solid wt) |
| $CaCO_3$ | 10.0 Kg | |
| Soybean mill run        q.s. | 100.0 Kg | |

The laidlomycin propionate potassium salt is dispersed in an aqueous slurry of $Ca(OH)_2$. The resulting dispersion is then used to granulate the $CaCO_3$. The resulting moist granulate is then air dried, followed by further granulation with a slurry of Masonex®. This second granulate is also dried using warm air to form a premix composition of the invention.

This premix is then mixed with Cali® Chick Mash in a ratio of 1:1,000 to form a finished feed suitable for administration to livestock, particularly chickens, turkeys, and ducks.

(B)    Premix 2:

| Ingredient | Amount | |
|---|---|---|
| Laidlomycin propionate, K+ | 5.0 g | |
| $Ca(OH)_2$ | 9.0 g | |
| Masonex• (pH adjusted to 12) | 10.0 g | (solid wt) |
| Stearyl alcohol | 5.0 g | |
| Soybean mill run        q.s. | 50.0 g | |

The soybean mill rub is first granulated with a slurry of aqueous $Ca(OH)_2$. The resulting moist granulate is then air dried, followed by further granulation with a slurry of laidlomycin propionate potassium salt and Masonex®. This second granulate is also dried using warm air. Next, a sealant film is applied to this dried second granulate by adding a methanol solution stearyl alcohol while stirring the dried second granulate, then drying with warm air to remove the methanol.

The resulting sealed second granulate is mixed with animal feed at a ratio of about 1:1,000 to produce an animal feed premix formulation suitable for administration to livestock.

(C)    Fluid Bed Premix:

| Ingredient | Amount | |
|---|---|---|
| Laidlomycin propionate, Na+ | 595.2 g | |
| $Ca(OH)_2$ | 1800.0 g | |
| Masonex• (pH adjusted to 12) | 2400.0 g | (solid wt) |
| Petrolatum | 240.0 g | |
| Soybean mill run | 964.8 g | |

The laidlomycin propionate sodium salt, Ca(OH)$_2$, and soybean mill run are weighed and mixed in a fluid bed unit for 5-10 minutes. The Masonex® solution is adjusted to pH 12 using NaOH, and is sprayed into the unit to granulate the dry mixture. The resulting granulate is then dried in the unit until the moisture is reduced to about 5-6%. Then, the petrolatum (or optionally mineral oil #35) is melted by heating to 70-75°C, and sprayed on the dried granulate. (Petrolatum or mineral oil serves as a tackifier to prevent settling of the premix in the final feed formulation.) The tackifier may alternatively be added in a planetary mixer. The premix thus prepared is approximately the same density as animal feed, and so resists settling and segregation.

The resulting premix is mixed with animal feed at a ratio of about 1:1,000 to produce an animal feed premix formulation suitable for administration to livestock, particularly cattle. Alternatively, the premix may be diluted about 1:500 to produce an animal feed premix formulation suitable for administration to livestock such as swine.

EXAMPLE 2

(Stability Study)

Test compositions were prepared as follows:

| Ingredient | Concentration | | |
| --- | --- | --- | --- |
| Composition: | A | B | C |
| Laidlomycin Propionate K+ | 10% | 10% | 10% |
| CaCO$_3$ | 30% | 30% | 20% |
| 50% Masonex® (pH 10) | 0% | 30% | 0% |
| Stearic acid | 0% | 0% | 10% |
| Soybean mill run | qs | qs | qs |

Composition A was prepared by first mixing the soybean mill run with an aqueous slurry of CaCO$_3$, then an aqueous slurry of laidlomycin propionate potassium salt. The resulting composition was granulated and air-dried.

Composition B was prepared by first mixing the soybean mill run with an aqueous slurry of CaCO$_3$. The laidlomycin propionate K+ was then dispersed in the Masonex® and the dispersion extended into the soybean mill run/CaCO$_3$ blend. The resulting mixture was dried to 11% moisture.

Composition C was prepared by dispersing CaCO$_3$ and laidlomycin propionate K+ in liquid stearic acid (50-55°C). The dispersion was allowed to congeal, milled, and mixed with soybean mill run.

Each of these compositions was then blended with chicken feed at a ratio of 1:1,000, and sealed in glass bottles. The bottles were stored at 40°C for three months, opened, and the percentage laidlomycin propionate potassium salt (LP) remaining was determined. The results are set out in Table I.

TABLE I.

| | Percent LP (+/- SD) | |
| --- | --- | --- |
| Composition | initial | final |
| A | 97.0+2.6 | 32.0+1.7 |
| B | 91.0+6.2 | 60.0+2.8 |
| C | 108.0+6.7 | 32.0+4.0 |

These results indicate that the compositions of the invention significantly increase the stability of pH-sensitive antibiotic esters.

6

EP 0 272 119 B1

**Claims**

**Claims for the following Contracting States : AT, BE, CH, DE, FR, GB, IT, LU, NL, SE**

1.  An animal feed premix composition which comprises:

    an acid-sensitive antibiotic ester or a veterinarily acceptable salt thereof;

    an amount of veterinarily acceptable base sufficient to raise the premix pH to an antibiotic ester-stablizing pH; optionally, a premix carrier; and

    an amount of suitable protective coating material sufficient to coat said antibiotic ester, premix carrier, and base.

2.  An animal feed premix composition according to claim 1 which composition comprises:

    0.001% to 25% acid-sensitive antibiotic ester or a veterinarily acceptable salt thereof;

    10% to 40% veterinarily acceptable base;

    10% to 50% suitable protective coating material;

    0% to 50% suitable premix carrier; and

    0% to 8% of a veterinarily acceptable sealant film material.

3.  The premix composition of claim 1 or claim 2, which comprises an amount of veterinarily acceptable sealant material sufficient to coat said antibiotic ester or veterinarily acceptable salt thereof, premix carrier, base, and protective coating material.

4.  The premix composition according to claim 2 or claim 3 wherein said sealant film is petrolatum, mineral oil stearyl alcohol or glyceryl monostearate.

5.  The premix composition according to claim 4 wherein the sealant film is stearyl alcohol or glyceryl monostearate.

6.  A composition according to any one of the preceding claims wherein said antibiotic ester is an acylate of laidlomycin, or a veterinarily acceptable salt thereof.

7.  A composition according to claim 6 wherein said laidlomycin acylate is an alkali metal or alkaline earth metal salt of laidlomycin propionate.

8.  A composition according to claim 6 or claim 7 wherein said composition comprises:

    5% to 20% laidlomycin propionate salt;

    25% to 40% base;

    30% to 40% protective coating;

    0% to 50% carrier; and

    4% to 8% sealant film.

9.  A composition according to any one of the preceding claims wherein said premix carrier is soy bean mill run or calcium carbonate.

10. A composition according to any one of the preceding claims wherein said base is calcium hydroxide, sodium hydroxide, or potassium hydroxide.

11. A composition according to any one the preceding claims wherein said protective coating is lignosulfonate, hemicellulose, starch or sucrose.

12. A composition according to claim 11 wherein said protective coating is hemicellulose.

13. A composition according to claim 7 wherein said composition comprises:

    5-20% laidlomycin propionate potassium salt;

    30-40% hemicellulose (dry weight)

    0-8% stearyl alcohol;

    30-40% $Ca(OH)_2$; and

    soybean mill run to produce 100%.

14. An animal feed premix composition according to any one of the preceding claims for the treatment of coccidiosis or for increasing feed efficiency.

15. Use of an animal feed premix composition of any one of claims 1 to 13 in the manufacture of a formulation for enhancing feed efficiency or treating coccidial infection in livestock, the formulation being for oral administration.

16. A method for preparing the animal feed premix composition of any one of claims 1 to 14 containing acid-sensitive antibiotic esters or a veterinarily acceptable salt thereof which method comprises:

mixing an acid sensitive antibiotic ester or a veterinarily acceptable salt thereof, an amount of veterinarily acceptable base sufficient to raise the premix pH to an antibiotic ester-stabilizing pH and optionally a suitable premix carrier to form a first mixture; and

mixing said first mixture with an amount of protective coating material sufficient to coat said antibiotic ester, premix carrier, and base to form a second mixture.

17. The method of claim 16 which further comprises: coating said second mixture with a sealant film.

18. The method of claim 17 wherein said sealant film is petrolatum, mineral oil, stearyl alcohol or glyceryl monostearate.

19. A method of enhancing feed efficiency in livestock, which method comprises:

orally administering a formulation containing a feed premix of any one of claims 1 to 14.

**Claims for the following Contracting States : ES, GR**

1. A method of preparing an animal feed premix composition which method comprises mixing:

an acid-sensitive antibiotic ester or a veterinarily acceptable salt thereof;

an amount of veterinarily acceptable base sufficient to raise the premix pH to an antibiotic ester-stablizing pH; optionally, a premix carrier; and

an amount of suitable protective coating material sufficient to coat said antibiotic ester, premix carrier, and base.

2. A method according to claim 1 which method comprises:

mixing an acid-sensitive antibiotic ester or a veterinarily acceptable salt thereof, an amount of veterinarily acceptable base sufficient to raise the premix pH to an antibiotic ester-stablizing pH and optionally a suitable premix carrier to form a first mixture; and

mixing said first mixture with an amount of protective coating material sufficient to coat said antibiotic ester, premix carrier, and base to form a second mixture.

3. Method according to claim 1 or claim 2 wherein the premix composition comprises:

0.001% to 25% acid-sensitive antibiotic ester or a veterinarily acceptable salt thereof;

10% to 40% veterinarily acceptable base;

10% to 50% suitable protective coating material;

0% to 50% suitable premix carrier; and

0% to 8% of a veterinarily acceptable sealant film material.

4. The method according to any one of the preceding claims wherein the premix composition comprises an amount of veterinarily acceptable sealant material sufficient to coat said antibiotic ester, premix carrier, base, and protective coating material.

5. The method according to claim 4 wherein said sealant film is petrolatum, mineral oil stearyl alcohol or glyceryl monostearate.

6. The method of claim 2 which further comprises: coating said second mixture with a sealant film.

7. The method of claim 6 wherein said sealant film is petrolatum, mineral oil, stearyl alcohol or glyceryl monostearate.

8

**8.** The method of claim 5 or claim 7 wherein the sealant film is stearyl alcohol or glyceryl monostearate.

**9.** A method according to any one of the preceding claims wherein said antibiotic ester is an acylate of laidlomycin, or a veterinarily acceptable salt thereof.

**10.** A method according to claim 9 wherein said laidlomycin acylate is an alkali metal or alkaline earth metal salt of laidlomycin propionate.

**11.** A method according to claim 9 or claim 10 wherein said composition comprises:
5% to 20% laidlomycin propionate salt;
25% to 40% base;
30% to 40% protective coating;
0% to 50% carrier; and
4% to 8% sealant film.

**12.** A method according to any one of the preceding claims wherein said premix carrier is soy bean mill run or calcium carbonate.

**13.** A method according to any one of the preceding claims wherein said base is calcium hydroxide, sodium hydroxide, or potassium hydroxide.

**14.** A method according to any one of the preceding claims wherein said protective coating is lignosulfonate, hemicellulose, starch or sucrose.

**15.** A method according to claim 14 wherein said protective coating is hemicellulose.

**16.** A method or use according to claim 10 wherein said composition comprises:
5-20% laidlomycin propionate potassium salt;
30-40% hemicellulose (dry weight)
0-8% stearyl alcohol;
30-40% $Ca(OH)_2$; and
soybean mill run to produce 100%.

**17.** Use of an animal feed premix composition as prepared by the method of any one of the preceding claims in the manufacture of a formulation for enhancing feed efficiency or treating coccidial infection in livestock, the formulation being for oral administration.

**18.** A method of enhancing feed efficiency in livestock, which method comprises:
orally administering a formulation containing a feed premix as prepared by the method of any one of claims 1 to 16.

**Patentansprüche**
**Patentansprüche für folgende Vertragsstaaten : AT, BE, CH, DE, FR, GB, IT, LU, NL, SE**

**1.** Tierfutter-Vormischungszusammensetzung, umfassend:
einen säureempfindlichen antibiotischen Ester oder ein veterinärisch annehmbares Salz davon;
eine Menge an veterinärisch annehmbarer Base, die ausreicht, den pH der Vormischung auf einen den antibiotischen Ester stabilisierenden pH zu erhöhen; gegebenenfalls einen Vormischungsträger; und
eine Menge an geeignetem schützendem Überzugsmaterial, die ausreicht, den antibiotischen Ester, den Vormischungsträger und die Base zu überziehen.

**2.** Eine Tierfutter-Vormischungszusammensetzung nach Anspruch 1, umfassend:
0,001% bis 25% säureempfindlichen antibiotischen Ester oder ein veterinärisch annehmbares Salz davon;
10% bis 40% veterinärisch annehmbare Base;
10% bis 50% geeignetes schützendes Überzugsmaterial;
0% bis 50% geeigneten Vormischungsträger; und
0% bis 8% eines veterinärisch annehmbaren Dichtungsmassen-Filmmaterials.

**3.** Vormischungszusammensetzung nach Anspruch 1 oder Anspruch 2, umfassend eine Menge an veterinärisch annehmbarem Dichtungsmassenmaterial, die ausreicht, den antibiotischen Ester oder das veterinärisch annehmbare Salz davon, den Vormischungsträger, die Base und das schützende Überzugsmaterial zu überziehen.

**4.** Vormischungszusammensetzung nach Anspruch 2 oder Anspruch 3, worin der Dichtungsmassenfilm Vaseline, Mineralöl, Stearylalkohol oder Glycerylmonostearat ist.

**5.** Vormischungszusammensetzung nach Anspruch 4, worin der Dichtungsmassenfilm Stearylalkohol oder Glycerylmonostearat ist.

**6.** Zusammensetzung nach irgendeinem der vorangehenden Ansprüche, worin der antibiotische Ester ein Acylat von Laidlomycin oder ein veterinärisch annehmbares Salz davon ist.

**7.** Zusammensetzung nach Anspruch 6, worin das Laidlomycinacylat ein Alkalimetall- oder Erdalkalimetallsalz von Laidlomycinpropionat ist.

**8.** Zusammensetzung nach Anspruch 6 oder Anspruch 7, worin die Zusammensetzung umfaßt:
5% bis 20% Laidlomycinpropionatsalz;
25% bis 40% Base;
30% bis 40% schützenden Überzug;
0% bis 50% Träger; und
4% bis 8% Dichtungsmassenfilm.

**9.** Zusammensetzung nach irgendeinem der vorangehenden Ansprüche, worin der Vormischungsträger Sojabohnen-Mühlenausstoß oder Calciumcarbonat ist.

**10.** Zusammensetzung nach irgendeinem der vorangehenden Ansprüche, worin die Base Calciumhydroxid, Natriumhydroxid oder Kaliumhydroxid ist.

**11.** Zusammensetzung nach irgendeinem der vorangehenden Ansprüche, worin der schützende Überzug Lignosulfonat, Hemicellulose, Stärke oder Saccharose ist.

**12.** Zusammensetzung nach Anspruch 11, worin der schützende Überzug Hemicellulose ist.

**13.** Zusammensetzung nach Anspruch 7, worin die Zusammensetzung umfaßt:
5-20% Laidlomycinpropionat-Kaliumsalz;
30-40% Hemicellulose (Trockengewicht);
0-8% Stearylalkohol;
30-40% $Ca(OH)_2$; und
Sojabohnen-Mühlenausstoß, um 100% zu erzeugen.

**14.** Tierfutter-Vormischungszusammensetzung nach irgendeinem der vorangehenden Ansprüche zur Behandlung von Kokzidiose oder zur Erhöhung der Futtereffizienz.

**15.** Verwendung einer Tierfutter-Vormischungszusammensetzung nach irgendeinem der Ansprüche 1 bis 13 bei der Herstellung einer Formulierung zur Vergrößerung der Futtereffizienz oder zur Behandlung von Kokzidieninfektion bei Vieh, wobei die Formulierung für die orale Verabreichung ist.

**16.** Verfahren zur Herstellung der Vormischungszusammensetzung nach irgendeinem der Ansprüche 1 bis 14, die säureempfindliche antibiotische Ester oder ein veterinärisch annehmbares Salz davon enthält, umfassend:
das Mischen eines säureempfindlichen antibiotischen Esters oder eines veterinärisch annehmbaren Salzes davon, einer Menge an veterinärisch annehmbarer Base, die ausreicht, den pH der Vormischung auf einen den antibiotischen Ester stabilisierenden pH zu erhöhen, und gegebenenfalls eines geeigneten Vormischungsträgers, um eine erste Mischung zu bilden; und
das Mischen der ersten Mischung mit einer Menge an schützendem Überzugsmaterial, die ausreicht, den antibiotischen Ester, den Vormischungsträger und die Base zu überziehen, um eine zweite Mischung zu bilden.

**17.** Verfahren nach Anspruch 16, weiter umfassend:
das Überziehen der zweiten Mischung mit einem Dichtungsmassenfilm.

**18.** Verfahren nach Anspruch 17, worin der Dichtungsmassenfilm Vaseline, Mineralöl, Stearylalkohol oder Glycerylmonostearat ist.

**19.** Verfahren zur Erhöhung der Futtereffizienz bei Vieh, umfassend:
die orale Verabreichung einer Formulierung, die eine Futtervormischung nach irgendeinem der Ansprüche 1 bis 14 enthält.

**Patentansprüche für folgende Vertragsstaaten : ES, GR**

**1.** Verfahren zur Herstellung einer Tierfutter-Vormischungszusammensetzung, umfassend das Mischen von:
einem säureempfindlichen antibiotischen Ester oder einem veterinärisch annehmbaren Salz davon;
einer Menge an veterinärisch annehmbarer Base, die ausreicht, den pH der Vormischung auf einen den antibiotischen Ester stabilisierenden pH zu erhöhen; gegebenenfalls einem Vormischungsträger; und
einer Menge an geeignetem schützenden Überzugsmaterial, die ausreicht, den antibiotischen Ester, den Vormischungsträger und die Base zu überziehen.

**2.** Verfahren nach Anspruch 1, umfassend:
das Mischen eines säureempfindlichen antibiotischen Esters oder eines veterinärisch annehmbaren Salzes davon, einer Menge an veterinärisch annehmbarer Base, die ausreicht, den pH der Vormischung auf einen den antibiotischen Ester stabilisierenden pH zu erhöhen, und gegebenenfalls eines geeigneten Vormischungsträgers, um eine erste Mischung zu bilden; und
das Mischen der ersten Mischung mit einer Menge an schützendem Überzugsmaterial, die ausreicht, den antibiotischen Ester, den Vormischungsträger und die Base zu überziehen, um eine zweite Mischung zu bilden.

**3.** Verfahren nach Anspruch 1 oder Anspruch 2, worin die Vormischungszusammensetzung umfaßt:
0,001% bis 25% säureempfindlichen antibiotischen Ester oder ein veterinärisch annehmbares Salz davon;
10% bis 40% veterinärisch annehmbare Base;
10% bis 50% geeignetes schützendes Überzugsmaterial;
0% bis 50% geeigneten Vormischungsträger; und
0% bis 8% eines veterinärisch annehmbaren Dichtungsmassen-Filmmaterials.

**4.** Verfahren nach irgendeinem der vorangehenden Ansprüche, worin die Vormischungszusammensetzung eine Menge an veterinärisch annehmbaren Dichtungsmassenmaterial, die ausreicht, den antibiotischen Ester, den Vormischungsträger, die Base und das schützende Überzugsmaterial zu überziehen, umfaßt.

**5.** Verfahren nach Anspruch 4, worin der Dichtungsmassenfilm Vaseline, Mineralöl, Stearylalkohol oder Glycerylmonostearat ist.

**6.** Vefahren nach Anspruch 2, welches weiter das Überziehen der zweiten Mischung mit einem Dichtungsmassenfilm umfaßt.

**7.** Verfahren nach Anspruch 6, worin der Dichtungsmassenfilm Vaseline, Mineralöl, Stearylalkohol oder Glycerylmonostearat ist.

**8.** Verfahren nach Anspruch 5 oder Anspruch 7, worin der Dichtungsmassenfilm Stearylalkohol oder Glycerylmonostearat ist.

**9.** Verfahren nach irgendeinem der vorangehenden Ansprüche, worin der antibiotische Ester ein Acylat von Laidlomycin oder ein veterinärisch annehmbares Salz davon ist.

**10.** Verfahren nach Anspruch 9, worin das Laidlomycinacylat ein Alkalimetall- oder Erdalkalimetallsalz von Laidlomycinpropionat ist.

**11.** Verfahren nach Anspruch 9 oder Anspruch 10, worin die Zusammensetzung umfaßt:
5% bis 20% Laidlomycinpropionatsalz;
25% bis 40% Base;
30% bis 40% schützenden Überzug;
0% bis 50% Träger; und
4% bis 8% Dichtungsmassenfilm.

**12.** Verfahren nach irgendeinem der vorangehenden Ansprüche, worin der Vormischungsträger Sojabohnen-Mühlenausstoß oder Calciumcarbonat ist.

**13.** Verfahren nach irgendeinem der vorangehenden Ansprüche, worin die Base Calciumhydroxid, Natriumhydroxid oder Kaliumhydroxid ist.

**14.** Verfahren nach irgendeinem der vorangehenden Ansprüche, worin der schützende Überzug Lignosulfonat, Hemicellulose, Stärke oder Saccharose ist.

**15.** Verfahren nach Anspruch 14, worin der schützende Überzug Hemicellulose ist.

**16.** Verfahren nach Anspruch 10, worin die Zusammensetzung umfaßt:
5-20% Laidlomycinpropionat-Kaliumsalz;
30-40% Hemicellulose (Trockengewicht);
0-8% Stearylalkohol;
30-40% Ca(OH)$_2$; und
Sojabohnen-Mühlenausstoß, um 100% zu erzeugen.

**17.** Verwendung einer Tierfutter-Vormischungszusammensetzung, wie durch das Verfahren nach irgendeinem der vorangehenden Ansprüche hergestellt, bei der Herstellung einer Formulierung zur Erhöhung der Futtereffizienz oder zur Behandlung von Kokzidieninfektion bei Vieh, wobei die Formulierung für die orale Verabreichung ist.

**18.** Verfahren zur Erhöhung der Futtereffizienz bei Vieh, umfassend:
die orale Verabreichung einer Formulierung, die eine Futtervormischung, wie nach irgendeinem der Ansprüche 1 bis 16 hergestellt, enthält.

**Revendications**
**Revendications pour les Etats contractants suivants : AT, BE, CH, DE, FR, GB, IT, LU, NL, SE**

**1.** Composition de prémélange alimentaire pour animaux, qui comprend :
un ester antibiotique sensible aux acides ou un de ses sels acceptables du point de vue vétérinaire ;
une quantité d'une base acceptable du point de vue vétérinaire, suffisante pour élever le pH du prémélange à un pH stabilisant l'ester antibiotique ; facultativement, un support de prémélange ; et une quantité d'une matière protectrice d'enrobage convenable, suffisante pour enrober ledit ester antibiotique, ledit support de prémélange, et ladite base.

**2.** Composition de prémélange alimentaire pour animaux suivant la revendication 1, qui comprend :
0,001 % à 25 % d'un ester antibiotique sensible aux acides ou d'un de ses sels acceptables du point de vue vétérinaire ;
10 % à 40 % d'une base acceptable du point de vue vétérinaire ;
10 % à 50 % d'une matière protectrice d'enrobage convenable ;
0 % à 50 % d'un support de prémélange ; et
0 % à 8 % d'une matière formant un film d'étanchéité, acceptable du point de vue vétérinaire.

**3.** Composition de prémélange suivant la revendication 1 ou la revendication 2, qui comprend une quantité d'une matière d'étanchéité acceptable du point de vue vétérinaire, suffisante pour enrober l'ester antibiotique ou son sel acceptable du point de vue vétérinaire, le support de prémélange, la base et la matière protectrice d'enrobage.

4. Composition de prémélange suivant la revendication 2 ou la revendication 3, dans laquelle le film d'étanchéité est un film de vaseline, d'une huile minérale, d'alcool stéarylique ou de monostéarate de glycéryle.

5. Composition de prémélange suivant la revendication 4, dans laquelle le film d'étanchéité est un film d'alcool stéarylique ou de monostéarate de glycéryle.

6. Composition suivant l'une quelconque des revendications précédentes, dans laquelle l'ester antibiotique est un acylate de laidlomycine ou un de ses sels acceptables du point de vue vétérinaire.

7. Composition suivant la revendication 6, dans laquelle l'acylate de laidlomycine est un sel de métal alcalin ou de métal alcalino-terreux de propionate de laidlomycine.

8. Composition suivant la revendication 6 ou la revendication 7, qui comprend :
   5 % à 20 % d'un sel de propionate de laidlomycine ;
   25 % à 40 % d'une base ;
   30 % à 40 % d'un enrobage protecteur ;
   0 % à 50 % d'un support ; et
   4 % à 8 % d'un film d'étanchéité.

9. Composition suivant l'une quelconque des revendications précédentes, dans laquelle le support de prémélange consiste en un produit de mouture de soja ou en carbonate de calcium.

10. Composition suivant l'une quelconque des revendications précédentes, dans laquelle la base est l'hydroxyde de calcium, l'hydroxyde de sodium ou l'hydroxyde de potassium.

11. Composition suivant l'une quelconque des revendications précédentes, dans laquelle l'enrobage protecteur est un lignosulfonate, l'hémicellulose, l'amidon ou le saccharose.

12. Composition suivant la revendication 11, dans laquelle l'enrobage protecteur consiste en hémicellulose.

13. Composition suivant la revendication 7, qui comprend :
   5 à 20 % de sel de potassium de propionate de laidlomycine ;
   30 à 40 % d'hémicellulose (poids sec) ;
   0 à 8 % d'alcool stéarylique ;
   30 à 40 % de $Ca(OH)_2$ ; et
   du produit de mouture de soja pour parvenir à 100 %.

14. Composition de prémélange alimentaire pour animaux suivant l'une quelconque des revendications précédentes pour le traitement de la coccidiose ou pour accroître le rendement alimentaire.

15. Utilisation d'une composition de prémélange alimentaire pour animaux suivant l'une quelconque des revendications 1 à 13 dans la production d'une formulation destinée à accroître le rendement alimentaire ou à traiter une infection coccidienne chez des animaux d'élevage, la formulation étant destinée à l'administration orale.

16. Procédé de préparation de la composition de prémélange alimentaire pour animaux suivant l'une quelconque des revendications 1 à 14 contenant un ester antibiotique sensible aux acides ou un de ses sels acceptables du point de vue vétérinaire, procédé qui consiste :
   à mélanger un ester antibiotique sensible aux acides ou un de ses sels acceptables du point de vue vétérinaire, une quantité d'une base acceptable du point de vue vétérinaire, suffisante pour élever le pH du prémélange à un pH stabilisant l'ester antibiotique et, facultativement, un support de prémélange convenable pour former un premier mélange ; et
   à mélanger ledit premier mélange à une quantité d'une matière protectrice d'enrobage suffisante pour enrober l'ester antibiotique, le support de prémélange et la base pour former un second mélange.

**17.** Procédé suivant la revendication 16, qui consiste en outre : à enrober le second mélange avec un film d'étanchéité.

**18.** Procédé suivant la revendication 17, dans lequel le film d'étanchéité est un film de vaseline, d'une huile minérale, d'alcool stéarylique ou de monostéarate de glycéryle.

**19.** Procédé pour accroître le rendement alimentaire chez des animaux d'élevage, qui consiste :
à administrer par voie orale une formulation contenant un prémélange alimentaire suivant l'une quelconque des revendications 1 à 14.

**Revendications pour les Etats contractants suivants : ES, GR**

**1.** Procédé de préparation d'une composition de prémélange alimentaire pour animaux, qui consiste à mélanger :
un ester antibiotique sensible aux acides ou un de ses sels acceptables du point de vue vétérinaire ;
une quantité d'une base acceptable du point de vue vétérinaire, suffisante pour porter le pH du prémélange à un pH stabilisant l'ester antibiotique ; facultativement, un support de prémélange ; et
une quantité d'une matière protectrice d'enrobage convenable, suffisante pour enrober l'ester antibiotique, le support de prémélange et la base.

**2.** Procédé suivant la revendication 1, qui consiste :
à mélanger un ester antibiotique sensible aux acides ou un de ses sels acceptables du point de vue vétérinaire, une quantité d'une base acceptable du point de vue vétérinaire, suffisante pour porter le pH du prémélange à un pH stabilisant l'ester antibiotique et, facultativement, un support de prémélange convenable pour former un premier mélange ; et
à mélanger ledit premier mélange à une quantité d'une matière protectrice d'enrobage suffisante pour enrober l'ester antibiotique, le support de prémélange et la base pour former un second mélange.

**3.** Procédé suivant la revendication 1 ou la revendication 2, dans lequel la composition de prémélange comprend :
0,001 % à 25 % d'un ester antibiotique sensible aux acides ou d'un de ses sels acceptables du point de vue vétérinaire ;
10 % à 40 % d'une base acceptable du point de vue vétérinaire ;
10 % à 50 % d'une matière protectrice d'enrobage convenable ;
0 % à 50 % d'un support de prémélange convenable ; et
0 % à 8 % d'une matière formant un film d'étanchéité acceptable du point de vue vétérinaire.

**4.** Procédé suivant l'une quelconque des revendications précédentes, dans lequel la composition de prémélange comprend une quantité d'une matière d'étanchéité acceptable du point de vue vétérinaire, suffisante pour enrober l'ester antibiotique, le support de prémélange, la base et la matière protectrice d'enrobage.

**5.** Procédé suivant la revendication 4, dans lequel le film d'étanchéité est un film de vaseline, d'une huile minérale, d'alcool stéarylique ou de monostéarate de glycéryle.

**6.** Procédé suivant la revendication 2, qui consiste en outre : à enrober le second mélange avec un film d'étanchéité.

**7.** Procédé suivant la revendication 6, dans lequel le film d'étanchéité est un film de vaseline, d'une huile minérale, d'alcool stéarylique ou de monostéarate de glycéryle.

**8.** Procédé suivant la revendication 5 ou la revendication 7, dans lequel le film d'étanchéité est un film d'alcool stéarylique ou de monostéarate de glycéryle.

**9.** Procédé suivant l'une quelconque des revendications précédentes, dans lequel l'ester antibiotique est un acylate de laidlomycine ou un de ses sels acceptables du point de vue vétérinaire.

**10.** Procédé suivant la revendication 9, dans lequel l'acylate de laidlomycine est un sel de métal alcalin ou de métal alcalino-terreux de propionate de laidlomycine.

**11.** Procédé suivant la revendication 9 ou la revendication 10, dans lequel la composition comprend :

5 % à 20 % d'un sel de propionate de laidlomycine ;

25 % à 40 % d'une base ;

30 % à 40 % d'un enrobage protecteur ;

0 % à 50 % d'un support ; et

4 % à 8 % d'un film d'étanchéité.

**12.** Procédé suivant l'une quelconque des revendications précédentes, dans lequel le support de prémélange est un produit de mouture de soja ou le carbonate de calcium.

**13.** Procédé suivant l'une quelconque des revendications précédentes, dans lequel la base est l'hydroxyde de calcium, l'hydroxyde de sodium ou l'hydroxyde de potassium.

**14.** Procédé suivant l'une quelconque des revendications précédentes, dans lequel l'enrobage protecteur est un lignosulfonate, l'hémicellulose, l'amidon ou le saccharose.

**15.** Procédé suivant la revendication 14, dans lequel l'enrobage protecteur consiste en hémicellulose.

**16.** Procédé ou utilisation suivant la revendication 10, dans lequel la composition comprend :

5 à 20 % de sel de potassium de propionate de laidlomycine ;

30 à 40 % d'hémicellulose (poids sec) ;

0 à 8 % d'alcool stéarylique ;

30 à 40 % de $Ca(OH)_2$ ; et

du produit de mouture de soja pour parvenir à 100 %.

**17.** Utilisation d'une composition de prémélange alimentaire pour animaux préparée par le procédé suivant l'une quelconque des revendications précédentes dans la production d'une formulation destinée à accroître le rendement alimentaire ou à traiter une infection coccidienne chez des animaux d'élevage, la formulation étant destinée à une administration orale.

**18.** Procédé pour accroître le rendement alimentaire chez des animaux d'élevage, qui consiste :

à administrer par voie orale une formulation contenant un prémélange alimentaire préparé par le procédé suivant l'une quelconque des revendications 1 à 16.